Europäisches Patentamt

European Patent Office

Office européen des brevets

(11) Veröffentlichungsnummer: **0 097 223**
**B1**

(12) # EUROPÄISCHE PATENTSCHRIFT

(45) Veröffentlichungstag der Patentschrift:
**20.11.86**

(51) Int. Cl.⁴: **B 60 T 17/02,** F 16 K 47/02

(21) Anmeldenummer: **83102738.8**

(22) Anmeldetag: **19.03.83**

(54) Einrichtung zur Dämpfung der Abluft von Ventileinrichtungen.

(30) Priorität: **12.06.82 DE 3222247**

(43) Veröffentlichungstag der Anmeldung:
**04.01.84 Patentblatt 84/1**

(45) Bekanntmachung des Hinweises auf die Patenterteilung:
**20.11.86 Patentblatt 86/47**

(84) Benannte Vertragsstaaten:
**AT CH DE FR GB LI SE**

(56) Entgegenhaltungen:
**EP - A - 0 022 916**
**DE - A - 2 922 677**
**DE - B - 1 550 138**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Menze, Wilfried, Goebelbastei 21, D-3257 Springe (DE)**
Erfinder: **Kiel, Bernd-Joachim, Barnestrasse 40, D-3050 Wunstorf 1 (DE)**
Erfinder: **Deike, Karl-Heinz, Feldstrasse 17, D-3017 Pattensen (DE)**
Erfinder: **König, Heinz-Werner, Luisenstrasse 6, D-3013 Barsinghausen (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

## Beschreibung

Die Erfindung betrifft eine Einrichtung zur Dämpfung der Abluft von Ventileinrichtungen in Druckluftanlagen, insbesondere in Fahrzeugbremsanlagen zur Dämpfung der beim Abblasen der überschüssigen, über einen Regeldruck geförderten Druckluft in die Atmosphäre entstehenden Geräusche, gemäss dem Oberbegriff des Patentanspruchs 1.

Derartige, aus der DE-A 2 922 677 bekannte, Einrichtungen werden z.B. in Druckregelventilen verwendet. Druckregelventile dienen im allgemeinen der selbsttätigen Regelung des Betriebsdruckes in Druckluftanlagen, indem diese das Durchströmen der von einem Luftpresser geförderten Druckluft in Förderstellung so lange freigeben, bis eine am Regelventil eingestellte Druckhöhe in der Verbraucheranlage oder in Vorratsbehältern erreicht ist. Beim Erreichen des eingestellten Betriebsdruckes unterbricht das Druckregelventil den weiteren Druckaufbau in der Anlage und steuert die vom Luftpresser weiterhin erzeugte Druckluft ins Freie.

Das schlagartige Austreten der Druckluft aus dem Druckregelventil ist mit einer starken Geräuschentwicklung verbunden.

Um das Abluftgeräusch zu reduzieren, ist es üblich, entweder am Druckmittelauslass oder auch im Druckmittelauslass eine Einrichtung zum Dämpfen der Abluft anzuordnen.

Die aus der DE-OS 2 922 677 bekannte Einrichtung weist ein Dämpfungsglied und eine Blende auf, wobei das Dämpfungsglied wenigstens zwei in axialer Richtung verlaufende Durchlässe mit unterschiedlich grossen Querschnitten aufweist. Die Blende weist ebenfalls einen in axialer Richtung verlaufenden Durchlass auf, welcher koaxial zu dem Durchlass des Dämpfungsgliedes angeordnet ist, der den kleineren Querschnitt aufweist.

Zwischen dem Dämpfungsglied und der Blende ist eine Druckfeder angeordnet. Der beim Umschalten des Druckregelventils in die Leerlaufstellung auftretende Druckimpuls bringt die Blende gegen die Kraft der Druckfeder am Dämpfungsglied zur Anlage. Der im Dämpfungsglied angeordnete, den grössten Querschnitt aufweisende Durchlass wird verschlossen. Die Druckluft kann zunächst nur über den Durchlass der Blende und den koaxial zu diesem angeordneten, den kleineren Querschnitt aufweisenden Durchlass des Dämpfungsgliedes zur Atmosphäre hin entweichen. Hat die Druckluft im Druckregelventil sich so weit entspannt, dass die zwischen dem Dämpfungsglied und der Blende angeordnete Druckfeder die Kraft des auf die Blende einwirkenden Druckes überwindet, so wird die Blende vom Dämpfungsglied abgehoben und der den grösseren Querschnitt aufweisende Durchlass des Dämpfungsgliedes freigegeben. Die vom Luftpresser geförderte Druckluft kann jetzt über beide Durchlässe des Dämpfungsgliedes zur Atmosphäre hin entweichen.

Von Nachteil ist bei dieser bekannten Einrichtung, dass die Blende erst durch den schlagartig auftretenden Druckimpuls zu Beginn des Austretens der komprimierten Luft aus dem Auslassventil in die den grösseren Durchlassquerschnitt des Dämpfungsgliedes verschliessende Stellung gebracht wird.

Durch das schlagartige Auftreffen der Blende auf dem Dämpfungsglied wird zum einen das Material sehr beansprucht, was zu frühzeitigem Verschleiss führen kann, und zum anderen ein relativ starkes Geräusch erzeugt.

Der Erfindung liegt deshalb die Aufgabe zugrunde, eine Einrichtung der eingangs genannten Art zu schaffen, die gegenüber der bekannten Einrichtung einen höheren Wirkungsgrad hat und geringerem Verschleiss unterliegt.

Diese Aufgabe wird mit der im Patentanspruch 1 angegebenen Erfindung gelöst. Vorteilhafte Weiterbildungen und Ausgestaltungen der Erfindung werden in den Unteransprüchen angegeben.

Die Erfindung bietet u.a. den Vorteil, neben geringerer Verschleissanfälligkeit eine wirksamere Dämpfung der Abluft zu erzielen.

Gemäss einer vorteilhaften Weiterbildung der Erfindung ist die Einrichtung zur Dämpfung der Abluft eines Druckregelventils in den Ventilkolben des Druckregelventils integriert.

Anhand der Zeichnungen werden drei Ausführungsbeispiele der Erfindung näher erläutert.

Es zeigen:

Fig. 1 ein Druckregelventil mit der erfindungsgemässen Einrichtung zum Dämpfen der Abluft, wobei diese Einrichtung im Druckmittelauslass angeordnet ist;

Fig. 2 einen Ausschnitt eines Druckregelventils, bei welchem die Einrichtung zum Dämpfen der Abluft im Ventilkolben angeordnet ist und

Fig. 3 einen Ausschnitt eines Druckregelventils mit einer Einrichtung zum Dämpfen der Abluft, wobei eine Blende radial zu einem Dämpfungsglied verschiebbar angeordnet ist.

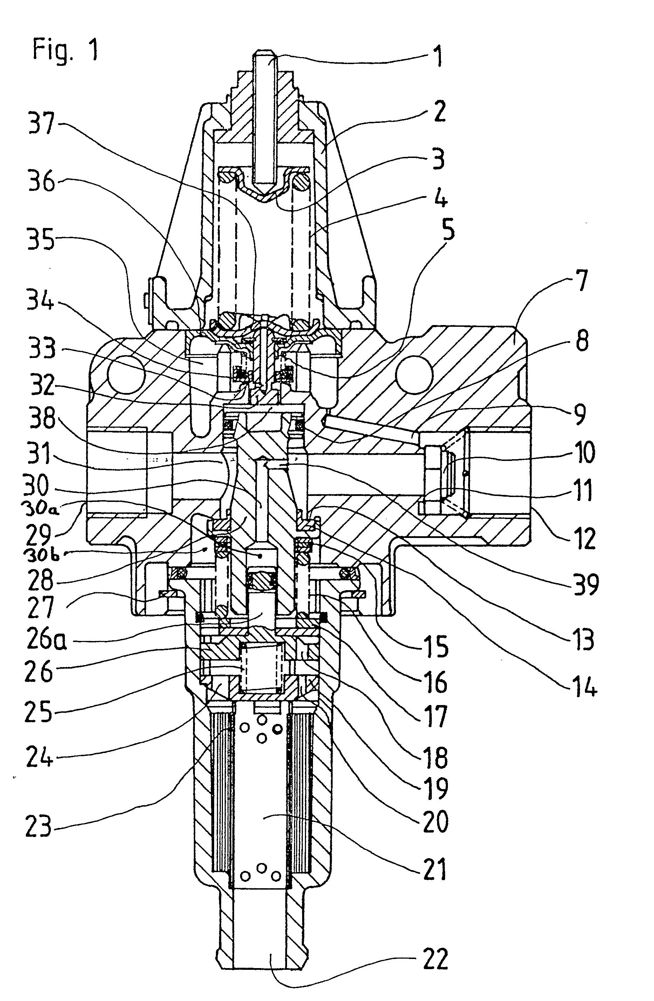

Fig. 1 zeigt ein Ventilgehäuse 7 mit einem Druckmitteleingang 29, welcher mit einem nicht dargestellten Drucklufterzeuger verbunden ist, sowie mit einem Druckmittelausgang 12, an den ein hier nicht gezeigter Druckluft-Vorratsbehälter angeschlossen ist. Im Druckmittelausgang 12 ist ein in Strömungsrichtung öffnendes Rückschlagventil 10, 11 angeordnet. Zwischen einem zur Aufnahme einer Regelfeder 4 dienenden Gehäusedeckel 2 und dem Ventilgehäuse 7 ist ein als Membran ausgebildeter Regelkolben 36 angeordnet, welcher über einen oberhalb der Membran 36 angeordneten ersten Federteller 37 unter Spannung der Regelfeder 4 steht, wobei diese Spannung mittels eines Gewindestiftes 1, welcher an einem zweiten Federteller 3 angreift, einstellbar ist. Unter der Membran 36 befindet sich eine Druckkammer 35, deren Beaufschlagung über einen mit dem Druckmittelausgang 12 in Verbindung stehenden Kanal 9 erfolgt.

Ein am ersten Federteller 37 aufliegender, die Membran 36 und die Kammer 35 zentral durchdringender Stössel bildet mit seinem als Ventilsitz 32 ausgebildeten Ende und einem Ventilkörper 34, der gleichfalls von dem Stössel durchdrungen wird, ein erstes Auslassventil 32, 34. Der erwähnte Ventilkörper 34 bildet in Doppelfunktion mit einem gehäusefesten Ventilsitz 33 ein Einlassventil 33, 34. Eine zwischen der Unterseite der Membran 36 und dem Ventilkörper 34 angeordnete Druckfeder 5 hält den Ventilkörper 34 in schwacher Spannung gegen den Ventilsitz 33.

Ein im unteren Teil des Gehäuses geführter Ventilkolben 28, dessen Druckbeaufschlagung über eine über das offene Einlassventil 33, 34 mit der Kammer 35 verbundene Kammer 38 erfolgt, bildet mit einem am unteren Ende befestigten Ventilkörper 14 und einem gehäusefesten Ventilsitz 13 ein zweites Auslassventil 14, 13. Dabei spannt eine unterhalb des Ventilkolbens 28 angeordnete und sich auf einem ringförmigen Vorsprung 17 im Gehäuse abstützende Druckfeder 16 den Ventilkolben 28 in Schliessstellung des zweiten Auslassventils 14, 13 vor. Der Regelkolben 36 steht mit dem zweiten Auslassventil 14, 13 in Wirkverbindung und zwar in der Weise, dass bei einer Bewegung des Regelkolbens 36 in Öffnungsrichtung des Einlassventils 33, 34 Druckmittel aus der Kammer 35 in die Kammer 38 gelangt und den Ventilkolben 28 in Öffnungsrichtung des zweiten Auslassventils 14, 13 betätigt. Ein mit einer Gehäuseöffnung 22 in Verbindung stehender Druckmittelauslass 21 dient bei Erreichen des Abschaltdruckes zur Entlüftung der vom Luftpresser geförderten Druckluft ins Freie. Die Wandung des Druckmittelauslasses 21 ist abgestuft, wobei die Abstufung als Lager für ein erstes Dämpfungsglied 19 dient. Das erste Dämpfungsglied 19 weist einen ersten und einen zweiten in axialer Richtung verlaufenden Durchlass 20, 24 auf. Der erste Durchlass 20 des ersten Dämpfungsgliedes 19 weist einen kleineren Querschnitt auf als der zweite Durchlass 24. Unterhalb des ersten Dämpfungsgliedes 19 ist ein als zusätzlicher Schalldämpfer dienender rohrförmiger Körper 23 angeordnet, der mit der Wandung des Druckmittelauslasses 21 eine Ringkammer bildet, die mit schalldämpfendem Material gefüllt ist. Oberhalb des ersten Dämpfungsgliedes 19 ist ein als Blende ausgebildetes zweites Dämpfungsglied 26 angeordnet, welches einen sich in Richtung auf den Ventilkolben 28 zu erstreckenden, als Betätigungskolben 26a ausgebildeten Fortsatz aufweist. Der Betätigungskolben 26a wird in einer Ausnehmung 30a des Ventilkolbens 28, welche in Richtung der Längsachse des Ventilkolbens 28 verläuft, abgedichtet geführt. Eine sich am Dämpfungsglied 19 abstützende Druckfeder 25 beaufschlagt die Blende 26 in Richtung auf den unterhalb des Ventilkolbens 28 angeordneten, als Anschlag für die Blende 26 dienenden ringförmigen Vorsprung 17 zu. In der Ausnehmung 30 des Ventilkolbens 28 ist eine in radialer Richtung verlaufende Bohrung 39 vorgesehen, über welche die Ausnehmung 30 mit der den Druckmitteleingang 29 mit dem Druckmittelausgang 12 verbindenden Kammer 31 verbunden ist. Die Blende 26 weist einen Durchlass 18 auf, der koaxial zum ersten, den kleineren Querschnitt aufweisenden Durchlass 20 des Dämpfungsgliedes 14g angeordnet ist.

Die Funktion der erfindungsgemässen Einrichtung wird nachstehend näher erläutert.

Die vom Luftpresser geförderte Druckluft strömt über den Druckmitteleingang 29, die Kammer 31, das von der Druckluft in die Offenstellung gebrachte Rückschlagventil 10, 11 und den Druckmittelausgang 12 in den Druckluft-Vorratsbehälter. Über die im Ventilkolben 28 vorgesehene Bohrung 39 gelangt die Druckluft auch in die als Betätigungskammer 30a erweiterte Ausnehmung 30. Der sich in der Betätigungskammer 30a aufbauende Druck verschiebt den Betätigungskolben 26a und somit auch die Blende 26 gegen die Kraft der Feder 25 in Richtung auf das Dämpfungsglied 19 zu, so dass der im Dämpfungsglied 19 vorgesehene, den grösseren Querschnitt aufweisende Durchlass 24 verschlossen wird. Gleichzeitig gelangt vom Druckmittelausgang 12 über den Kanal 9 Druckluft in die Kammer 35 unterhalb des Membrankolbens 36. In der Kammer 35 baut sich nun ein Druck auf, der auf die Unterseite des Membrankolbens 36 wirkt. Sobald dieser Druck grösser ist als die mittels des Gewindestiftes 1 eingestellte Spannung der Druckfeder 4, wölbt sich die Membran 36 nach oben und nimmt dabei den Stössel mit. Das erste Auslassventil 32, 34 schliesst, und das Einlassventil 33, 34 öffnet, so dass die in der Kammer 35 anstehende Druckluft in die Kammer 38 gelangt. Der sich hier aufbauende Druck bewegt den Ventilkolben 28 gegen die Kraft der Feder 16 nach unten. Das zweite Auslassventil 13, 14 öffnet und die vom Luftpresser geförderte Druckluft entweicht über eine Auslasskammer 30a, gedrosselt über den im Dämpfungsglied 19 angeordneten, einen geringeren Querschnitt aufweisenden Durchlass 20 sowie die Gehäuseöffnung 22 zur Atmosphäre.

Ist der Druck in der den Druckmitteleingang 29 mit dem Druckmittelausgang 12 verbindenden Kammer 31 und somit auch der Druck in der Betätigungskammer 30a sowie in der Ausnehmung 30 des Ventilkolbens 28 soweit abgesunken, dass die Kraft der die Blende 26 beaufschlagenden Druckfeder 25 überwiegt, wird die Blende 26 nach oben gegen den als Anschlag dienenden ringförmigen Vorsprung 17 verschoben. Der im Dämpfungsglied 19 angeordnete, den grösseren Querschnitt aufweisende zweite Durchlass 24 ist jetzt offen und die vom Luftpresser geförderte Druckluft entweicht über beide Durchlässe 20, 24 die zusätzlich Schalldämpfungseinrichtung 23 und die Gehäuseöffnung 22 weitgehendst entspannt zur Atmosphäre.

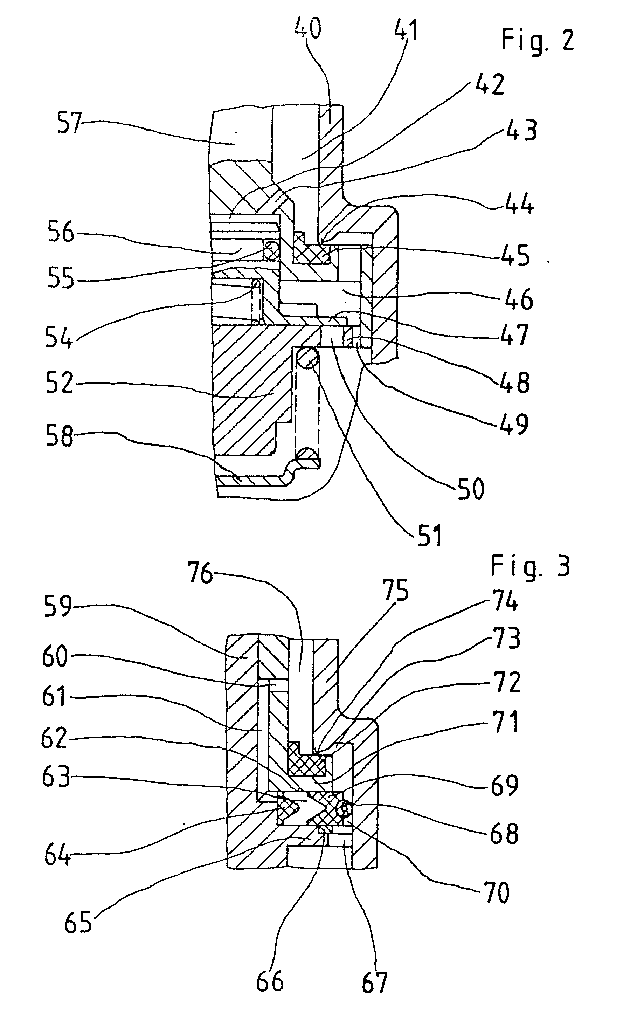

Fig. 2 zeigt einen Ausschnitt eines Druckregelventils, bei welchem die Einrichtung zum Dämpfen der Abluft im Ventilkolben angeordnet ist.

In einer einen Druckmitteleingang mit einem Druckmittelausgang verbindenden Kammer 41 des Druckregelventils 40 ist ein Ventilkolben 57, 52 gegen die Kraft einer Druckfeder 51 verschiebbar angeordnet. Die Druckfeder 51 stützt sich an einem im Gehäuse des Druckregelventils 40 befestigten Federteller 58 ab. Der Ventilkolben 57, 52 ist geteilt ausgebildet, wobei das obere Teil 57 eine abgestufte Ausnehmung 42, 46 aufweist. Das untere Teil 52 des Ventilkolbens ist mit einem als erstes Dämpfungsglied 48 dienenden umlaufenden Vorsprung versehen, welcher einen ersten Durchlass 49 und einen zweiten Durchlass 50 aufweist. Der erste Durchlass 49 hat einen kleineren Querschnitt als der zweite Durchlass 50. Das obere Teil 57 des Ventilkolbens 57, 52 weist ebenfalls einen umlaufenden Vorsprung auf, dessen Aussendurchmesser dem Aussendurchmesser des als erste Dämpfungsglied 48 dienenden Vorsprunges entspricht. Auf der dem ersten Dämpfungsglied 48 abgewandten Seite des Vorsprunges des oberen Ventilkolbenteiles 57 ist ein Ventilkörper 45 angeordnet, der zusammen mit einem sich radial in Richtung auf den Ventilkolben 57, 52 zu erstreckenden, als Ventilsitz 44 ausgebildeten Gehäusevorsprung des Druckregelventils 40 ein Auslassventil 44, 45 bildet, über welches die vom Luftpresser gelieferte Druckluft bei Erreichen eines vorbestimmten Druckes im Druckluft-Vorratsbehälter zur Atmosphäre gelangt. In der abgestuften Ausnehmung des oberen Ventilkolbenteiles 57 ist ein mit einem Betätigungskolben 56 versehenes zweites Dämpfungsglied bzw. Blende 47 vorgesehen. Der Betätigungskolben 56 wird im abgestuften Teil der Ausnehmung des oberen Ventilkolbens 57 geführt und begrenzt eine durch den abgestuften Teil der Ausnehmung gebildete als Betätigungskammer dienende erste Kammer 42. Die erste Kammer bzw. Betätigungskammer 42 steht über einen Kanal 43 mit der den Druckmitteleingang mit dem Druckmittelausgang des Druckregelventils verbindenden von einem Versorgungsdruck beaufschlagbaren Kammer 41 in Verbindung. Die erste Kammer 42 ist mittels eines auf dem Umfang des Betätigungskolbens 56 angeordneten Dichtringes 55 gegen eine zweite Kammer bzw. Auslasskammer 46 abgedichtet. Die zweite Kammer 46 wird von dem den grösseren Durchmesser aufweisenden Teil der abgestuften Ausnehmung des Betätigungskolbens 56 und dem ersten Dämpfungsglied 48 gebildet. Der Betätigungskolben 56 wird von einer Druckfeder 54, die sich am unteren Teil 52 des Ventilkolbens 57, 52 abstützt, in Richtung auf die erste Kammer 42 zu beaufschlagt, so dass das mit dem Betätigungskolben verbundene zweite Dämpfungsglied 47 bei Druckentlastung in der ersten Kammer 42 vom ersten Dämpfungsglied 48 abgehoben wird. Das zweite Dämpfungsglied 47 ist so bemessen, dass der den grösseren Querschnitt aufweisende Durchlass 50 des ersten Dämpfungsgliedes bei Druckbeaufschlagung des Betätigungskolbens 56 vom zweiten Dämpfungsglied 47 verschlossen wird.

Die Funktion dieser Einrichtung ist im Prinzip die gleiche wie die der in Fig. 1 beschriebene Einrichtung.

Bei Druckeinsteuerung in einen Verbraucher, wie z.B. einen Druckluft-Vorratsbehälter, strömt von der den Druckmitteleingang mit dem Druckmittelausgang verbindenden Kammer 41 Druckluft durch den Kanal 43 in die vom Betätigungskolben 56 begrenzte Kammer 42. Der sich in der Kammer 42 aufbauende Druck verschiebt den Betätigungskolben 56 gegen die Kraft der Feder 54 in Richtung auf das untere Ventilkolbenteil 52 zu. Das zweite Dämpfungsglied 47 legt sich auf das erste Dämpfungsglied 48 auf und verschliesst den den grösseren Querschnitt aufweisenden Durchlass 50 des ersten Dämpfungsgliedes 48. Hat der Druck im Verbraucher den vorgegebenen Wert erreicht, öffnet das Auslassventil 44, 45. Der Druck in der Kammer 41 wird über das geöffnete Auslassventil 44, 45, die Kammer 46 sowie den den geringeren Querschnitt aufweisenden Durchlass 49 des ersten Dämpfungsgliedes 48 relativ langsam abgebaut. Gleichzeitig verringert sich der Druck in der vom Betätigungskolben 56 begrenzten Kammer 42. Durch die Kraft der Feder 54 wird der Betätigungskolben 56 nach oben bewegt und das mit dem Betätigungskolben 56 verbundene zweite Dämpfungsglied 47 vom ersten Dämpfungsglied 48 abgehoben. Da jetzt auch der den grösseren Querschnitt aufweisende Durchlass 50 des ersten Dämpfungsgliedes 48 offen ist, wird die vom Luftpresser geförderte Druckluft weitgehendst entspannt zur Atmosphäre geführt. Schliesst das Auslassventil 44, 45 wieder, so baut sich in der den Druckmitteleingang mit dem Druckmittelausgang verbindenden Kammer 41 Druck auf, der über den Kanal 43 in die vom Betätigungskolben 56 begrenzte Kammer 42 gelangt und den Betätigungskolben 56 gegen die Kraft der Feder 54 nach unten verschiebt. Das zweite Dämpfungsglied 47 legt sich auf das erste Dämpfungsglied 48 auf und verschliesst den den grösseren Querschnitt aufweisenden Durchlass 50.

Fig. 3 zeigt einen Ausschnitt eines Druckregelventils mit einer Einrichtung zum Dämpfen der Abluft, wobei ein zweites Dämpfungsglied radial zu einem ersten Dämpfungsglied verschiebbar angeordnet ist.

In einem Gehäuse 75 ist ein mit einem sich radial nach aussen erstreckenden umlaufenden ersten Vorsprung 71 versehener Ventilkolben 59 gegen die Kraft einer nicht dargestellten Feder verschiebbar angeordnet. Auf dem Vorsprung 71 ist ein Ventilkörper 72 vorgesehen, der zusammen mit einem sich radial auf den Ventilkolben 59 zu erstreckenden, als Ventilsitz 74 ausgebildeten Gehäusevorsprungs ein Auslassventil 74, 72 bildet. Das Auslassventil 74, 72 begrenzt eine einen Druckmitteleingang mit einem Druckmittelausgang verbindende von einem Versorgungsdruck beaufschlagbare Kammer 76. Der Druckmitteleingang steht mit einem Drucklufterzeuger und der Druckmittelausgang steht mit einem Druckluftverbraucher in Verbindung. Unterhalb des ersten umlaufenden Vorsprunges 71 des Ventilkolbens 59 ist ein zweiter sich radial nach aussen erstrekender umlaufender Vorsprung 65 am Ventilkolben 59 vorgesehen, welcher einen grösseren Querschnitt aufweist als der erste umlaufende Vorsprung 71. Zwischen den beiden Vorsprüngen 71, 65 ist eine in Umfangsrichtung des Ventilkolbens 59 verlaufende Nut 62 angeordnet, die zur Aufnahme und Führung eines als zweites Dämpfungsglied bzw. Blende 69 ausgebildeter z.B. schwalbenschwanzförmigen Dichtringes dient. Der Dichtring 69 ist so angeordnet, dass das schwalbenschwanzförmig ausgebildete Teil dem Ventilkolben 59 zugewandt und mit einem entsprechend ausgebildeten, den Ventilkolben 59 umschliessenden Stützring 64 in Formschluss bringbar ist. Die dem schwalbenschwanzförmigen Teil gegenüberliegende Seite des Dichtringes 69 wird von einer sich an der Ventilgehäuseinnenwand abstützenden Feder 68, z.B. einer Wurmfeder, in Richtung auf den Ventilkolben 59 zu belastet, so dass zwischen Ventilgehäuseinnenwand und dem Dichtring 69 ein erster Durchlass 70 gebildet wird, dessen Querschnitt durch Verschieben des Dichtringes 69 auf die Ventilgehäuseinnenwand zu oder von dieser weg veränderbar ist. Oberhalb des Dichtringes 69 ist ein Ringkanal bzw. eine Auslasskammer 73 vorgesehen, der von der Umfangsfläche des ersten Vorsprunges 71 des Ventilkolbens 59 und der Ventilgehäuseinnenwand begrenzt wird. Der als erstes Dämpfungsglied 65 ausgebildete zweite Vorsprung des Ventilkolbens weist einen sich in axialer Richtung erstreckenden zweiten Durchlass 67 auf, dessen Querschnitt so bemessen ist, dass er dem Querschnitt des aus dem Dichtring 69 und der Gehäuseinnenwand gebildeten ersten Durchlasses 70 entspricht, wenn der Dichtring 69 seinen grössten Abstand zur Gehäuseinnenwand einnimmt. Der Ventilkolben 59 weist einen in Richtung seiner Längsachse verlaufenden Durchlass 61 auf, der einerseits über eine Querbohrung 60 mit der den Druckmitteleingang mit dem Druckmittelausgang verbindenden Kammer 76 und andererseits mit einem Raum 63 in Verbindung steht, welcher vom schwalbenschwanzförmigen Teil des Dichtringes 69 begrenzt wird.

Bei Druckeinsteuerung in einen Verbraucher strömt von der den Druckmitteleingang mit dem Druckmittelausgang verbindenden Kammer 76 Druckluft durch die Querbohrung 60 und den in Längsrichtung des Ventilkolbens verlaufenden Durchlass 61 in den Raum 63. Der sich im Raum 63 aufbauende Druck beaufschlagt die schrägen Flächen des schwalbenschwanzförmigen Teiles des Dichtringes 69, wodurch zum einen eine Erweiterung des Dichtringes 69 in Richtung auf die Ventilgehäuseinnenwand zu und zum anderen ein verstärktes Andrücken der Dichtringflanken an die von den beiden Vorsprüngen 71, 65 gebildeten Wandungen der den Dichtring 69 aufnehmenden Nut 62 bewirkt wird. Der vom Dichtring 69 und der Ventilgehäuseinnenwand gebildete erste Durchlass 70 verengt sich, wie in Fig. 3 dargestellt ist.

Ist der Druck im Verbraucher auf einen vorbestimmten Wert angestiegen, öffnet das Auslassventil 72, 74 und der Druck in der den Druckmitteleingang mit dem Druckmittelausgang verbindenden Kammer 76 wird über den ersten Durchlass 70 und den zweiten Durchlass 67 verzögert abgebaut. Mit dem Druckabbau in der Kammer 76 wird auch der Druck im Raum 63 über den Durchlass 61 und die Bohrung 60 sowie die Kammer 76 abgesenkt. Der Durchmesser des Dichtringes 69 verringert sich, und der Querschnitt des ersten Durchlasses 70 vergrössert sich demzufolge. Die vom Drucklufterzeuger gelieferte Druckluft gelangt jetzt weitgehendst entspannt zur Atmosphäre.

Das aus dem Dichtring gebildete zweite Dämpfungsglied bzw. Blende hat eine mit der Funktion einer dynamischen Drossel vergleichbare Funktion.

Es ist selbstverständlich auch möglich, anstelle des Dichtringes einen kolbenbetätigten Schieber o.ä. einen Durchlassquerschnitt druckabhängig verändernde Mittel vorzusehen.

**Patentansprüche**

1. Einrichtung zur Dämpfung der Abluft von mit einem Versorgungsdruck beaufschlagbaren Ventileinrichtungen in Druckluftanlagen, insbesondere in Fahrzeugbremsanlagen zur Dämpfung der beim Abblasen der überschüssigen, über einen Regeldruck geförderten Druckluft in die Atmosphäre entstehenden Geräusche, welche die folgenden Merkmale umfasst:

a) es ist ein mit wenigstens einem Durchlass (20, 24; 49, 50; 67) versehenes Dämpfungsglied (19, 48, 65) vorgesehen;
b) es ist eine verstellbare Blende (26, 47, 69) vorgesehen, welche gegen eine Rückstellkraft (25, 54, 68) im Sinne einer Veränderung des Querschnittes des Durchlasses relativ zum Dämpfungsglied (19, 48, 65) bewegbar ist;
c) es ist eine Auslasskammer (30b, 46, 73) vorgesehen, die von der dem Durchlass des Dämpfungsgliedes (19, 48, 65) abgewandten Seite der Blende (26, 47, 69) begrenzt wird;

dadurch gekennzeichnet, dass auf der dem Durchlass (20, 24; 49, 50; 67) des Dämpfungsgliedes (19, 48, 65) abgewandten Seite der Blende (26, 47, 69) eine von der Blende (26, 47, 69) und/oder einem mit der Blende (26, 47, 69) verbundenen Betätigungsglied begrenzte Betätigungskammer (30a, 42, 63) angeordnet ist, welche mit einer vom Versorgungsdruck beaufschlagbaren Kammer (31, 41, 76) ständig verbunden ist, in der Weise, dass die Blende (26, 47, 69) beim Belüften eines Verbrauchers vom Versorgungsdruck in Schliessrichtung bewegt wird und bei Absinken des Versorgungsdruckes von der Rückstellkraft in die Offenstellung gebracht wird.

2. Einrichtung nach Anspruch 1 für ein Druckregelventil, welches die folgenden Merkmale umfasst:

a) es ist ein mit einem Drucklufterzeuger verbundener Druckmitteleingang (29) und ein mit wenigstens einem Verbraucher verbundener Druckmittelausgang (12) vorgesehen, wobei der Druckmittelausgang (12) ein in Richtung auf den Verbraucher zu in die Offenstellung bringbares Rückschlagventil (10, 11) aufweist;

b) es ist ein Regelkolben (36) vorgesehen, welcher vom Ausgangsdruck gegen die Kraft eines Regelelementes verschiebbar ist;

c) der Regelkolben (36) steht mit einer Ventileinrichtung (15, 14) in Wirkverbindung, welche in einer den Druckmitteleingang (29) mit dem Druckmittelausgang (12) verbindenden Kammer (31, 76) angeordnet ist und über welche die Kammer (31, 76) mit einem zur Atmosphäre führenden Druckmittelauslass (22) verbindbar ist;

d) im Druckmittelauslass (22) ist wenigstens ein mit wenigstens einem Durchlass versehenes Dämpfungsglied (19, 65) angeordnet;

e) es ist eine Blende (26, 69) vorgesehen, welche im Sinne einer Verkleinerung bzw. einer Vergrösserung des Durchlassquerschnittes des Dämpfungsgliedes (19, 65) relativ zum Dämpfungsglied (19, 65) verschiebbar angeordnet ist;

f) die Blende (26, 69) ist gegen eine Rückstellkraft im Sinne einer Querschnittsverringerung des Querschnittes des Durchlasses des Dämpfungsgliedes (19, 65) verschiebbar;

dadurch gekennzeichnet, dass zwischen der Kammer (31, 76) und der dem Durchlass des Dämpfungsgliedes (19, 65) abgewandten Seite der Blende (26, 69) eine Druckmittelverbindung (30, 39, 60, 61) vorgesehen ist.

3. Einrichtung nach Anspruch 2, gekennzeichnet durch die folgenden Merkmale:

a) das Dämpfungsglied (19) ist scheibenförmig ausgebildet und weist wenigstens zwei in axialer Richtung verlaufende Durchlässe (20, 24) auf, wobei die Durchlässe (20, 24) unterschiedliche Querschnitte aufweisen;

b) die Blende (26) ist koaxial zum Dämpfungsglied (15) angeordnet und weist wenigstens einen in axialer Richtung verlaufenden Durchlass (18) auf, welcher koaxial zu dem Durchlass (20) des Dämpfungsgliedes (19) angeordnet ist, der den kleineren Querschnitt aufweist;

c) zwischen dem Dämpfungsglied (19) und der Blende (26) ist eine Druckfeder (25) angeordnet;

d) die Blende (26) weist auf ihrer dem Dämpfungsglied (19) abgewandten Seite einen als Betätigungskolben (26a) ausgebildeten Fortsatz auf, welcher in der Betätigungskammer (30a) der Ventileinrichtung (28) des Druckregelventils abgedichtet geführt wird;

e) die Betätigungskammer (30a) der Ventileinrichtung (28) steht über einen Kanal (39) mit der den Druckmitteleingang (29) mit dem Druckmittelausgang (12) verbindenden Kammer (31) ständig in Verbindung;

f) die mit dem Betätigungskolben (26a) verbundene Blende (26) wird durch Beaufschlagung des Betätigungskolbens (26a) mit dem Eingangsdruck gegen die Kraft der Druckfeder (25) am Dämpfungsglied (19) zur Anlage gebracht und bei Absinken des Eingangsdruckes unter einen von der Druckfeder (25) bestimmten Druckwert durch die Kraft der Druckfeder (25) vom Dämpfungsglied (19) abgehoben.

4. Einrichtung nach Anspruch 2, gekennzeichnet durch die folgenden Merkmale:

a) das Dämpfungsglied (65) weist wenigstens einen in Richtung seiner Längsachse verlaufenden Durchlass (67) auf;

b) die Blende besteht aus einem Dichtelement (69), welches in Richtung der Querachse des Dämpfungsgliedes (65) im Sinne einer Querschnittsverringerung des Durchlasses (67) und/oder eines von der Blende begrenzten weiteren Durchlasses (70) gegen eine Rückstellkraft verschiebbar ist;

c) es ist eine Verbindung zwischen der den Druckmitteleingang mit dem Druckmittelausgang verbindenden Kammer (76) und der dem weiteren Durchlass (70) abgewandten Seite des Dichtelementes (69) vorgesehen.

5. Einrichtung nach Anspruch 4, dadurch gekennzeichnet, dass das Dichtelement (69) auf seiner dem weiteren Durchlass (70) abgewandten Seite schwalbenschwanzförmig ausgebildet ist, wobei die schwalbenschwanzförmigen Ansätze des Dichtelementes (69) an den das Dichtelement (69) führenden Flächen des Druckregelventils zur Anlage kommen.

6. Einrichtung nach Anspruch 2, dadurch gekennzeichnet, dass das Dämpfungsglied und die Blende im Ventilkolben angeordnet sind.

## Claims

1. Arrangement for damping the outflowing air from valve arrangements that can be subjected to a supply pressure in compressed air systems, especially in vehicle brake systems for damping the noises produced on expelling the excess compressed air, conveyed by way of a control pressure, into the atmosphere, which has the following features:

a) a damping member (19, 48, 65) having at least one opening (20, 24; 49, 50; 67) is provided;

b) an adjustable baffle (26, 47, 69) is provided which is movable relative to the damping member (19, 48, 65) against a restoring force (25, 54, 68) in such a manner that it brings about a change in the cross-section of the opening;

c) an outlet chamber (30b, 46, 73) is provided which is bounded by the side of the baffle (26, 47, 69) remote from the opening in the damping member (19, 48, 65);

characterised in that on the side of the baffle (26, 47, 69) remote from the opening (20, 24; 49, 50; 67) in the damping member (19, 48, 65) there is arranged an actuating chamber (30a, 42, 63) bounded by the baffle (26, 47, 69) and/or by an actuating member connected to the baffle (26, 47, 69), which is continuously connected to a chamber (31, 41, 76), which can be subjected to the supply pressure, in such a manner that when a consumer is charged with air pressure the baffle (26, 47, 69) is moved in the closing direction by the supply pressure and when the supply pressure drops is brought into the open position by the restoring force.

2. Arrangement according to claim 1 for a pressure-control valve which comprises the following features:

a) a pressure-medium input (29) connected to a compressed air producer and a pressure-medium output (12) connected to at least one consumer are provided, the pressure-medium output (12) having a non-return valve (10, 11) that can be brought into the open position in the direction towards the consumer;

b) a control piston (36) is provided which can be displaced by the output pressure against the force of a control element;

c) the control piston (36) is in active connection with a valve arrangement (13, 14) which is arranged in a chamber (31, 76) that connects the pressure-medium input (29) with the pressure-medium output (12) and by way of which the chamber (31, 76) can be connected to a pressure-medium outlet (22) leading to the atmosphere;

d) arranged in the pressure-medium outlet (22) is at least one damping member (19, 65) provided with at least one opening;

e) a baffle (26, 69) is provided which is arranged in such a manner that it is displaceable relative to the damping member (19, 65) in such a manner that it brings about a reduction or an increase in the cross-section of the opening in the damping member (19, 65);

f) the baffle (26, 69) can be displaced against a restoring force in such a manner that it brings about a reduction in the cross-section of the opening in the damping member (19, 65);

characterised in that between the chamber (31, 76) and the side of the baffle (26, 69) remote from the opening in the damping member (19, 65) a pressure-medium connection (30, 39, 60, 61) is provided.

3. Arrangement according to claim 2, characterised by the following features:

a) the damping member (19) is of disc-like construction and has at least two openings (20, 24) extending in an axial direction, the openings (20, 24) having different cross-sections;

b) the baffle (26) is arranged coaxially with respect to the damping member (19) and has at least one opening (18) extending in an axial direction which is arranged coaxially with respect to the opening (20) in the damping member (19) which has the smaller cross-section;

c) between the damping member (19) and the baffle (26) is arranged a compression spring (25);

d) the baffle (26) has on its side remote from the damping member (19) a projection designed as an actuating piston (26a) which is guided in such a manner that it is sealed in the actuating chamber (30a) of the valve arrangement (28) of the pressure-control valve;

e) the actuating chamber (30a) of the valve arrangement (28) is continuously connected by the way of a channel (39) to the chamber (31) connecting the pressure-medium input (29) to the pressure-medium output (12);

f) the baffle (26) connected to the actuating piston (26a) is brought to rest on the damping member (19) against the force of the compression spring (25) by subjecting the actuating piston (26a) to the input pressure and when the input pressure drops to below a pressure value determined by the compression spring (25) is lifted from the damping member (19) by the force of the compression spring (25).

4. Arrangement according to claim 2, characterised by the following features:

a) the damping member (65) has at least one opening (67) extending in the direction of its longitudinal axis;

b) the baffle consists of a sealing element (69) which can be displaced against a restoring force in the direction of the transverse axis of the damping member (65) in such a manner that it brings about a reduction in the cross-section of the opening (67) and/or of a further opening (70) bounded by the baffle;

c) a connection is provided between the chamber (76) connecting the pressure-medium input with the pressure-medium output and the side of the sealing element (69) remote from the further opening (70).

5. Arrangement according to claim 4, characterised in that the sealing element (69) is designed in the shape of a swallow's tail on its side remote from the further opening (70), the swallow's-tail-shaped projections of the sealing element (69) coming to rest on the surface of the pressure-control valve that guide the sealing element (69).

6. Arrangement according to claim 2, characterised in that the damping member and the baffle are arranged in the valve piston.

## Revendications

1. Dispositif pour l'amortissement de l'air évacué pour des installations de robinets dans lesquelles peut régner une pression d'alimentation, dans des installations d'air comprimé, en particulier dans des installations de frein de véhicule, pour amortir le bruit qui apparaît lors de l'évacuation dans l'atmosphère de l'air comprimé en excès fourni par l'intermédiaire d'une pression de régulation, dispositif qui présente les caractéristiques suivantes:

a) Il est prévu un élément amortisseur (19, 48, 65) muni d'au moins un passage (20, 24; 49, 50; 67);

b) il est prévu un écran réglable en position (26, 47, 69) qui peut se déplacer par rapport à l'élément amortisseur (19, 48, 65), en agissant contre une force de rappel (25, 54, 68), au sens d'une modification de la section du passage;

c) il est prévu une chambre de sortie (30b, 46, 73) qui est limitée par la face de l'écran (26, 47, 69) opposée au passage de l'élément amortisseur (19, 48, 65);

caractérisé en ce que, du côté de l'écran (26, 47, 69) opposé au passage (20, 24, 49, 50; 67) de l'élément amortisseur (19, 48, 65) est disposée une chambre de manœuvre (30a, 42, 33) qui est limitée par l'écran (26, 47, 69) et/ou par un élément de manœuvre lié à l'écran (26, 47, 69) et qui est reliée en permanence à une chambre (31, 41, 76) dans laquelle règne la pression d'alimentation, de façon que, lorsque la pression d'alimentation arrive dans un récepteur, l'écran (26, 47, 69) se déplace en direction de la fermeture et, lorsque la pression d'alimentation baisse, l'écran soit amené en position d'ouverture par la force de rappel.

2. Dispositif selon la revendication 1 pour un robinet à soupape de régulation de pression qui présente les caractéristiques suivantes:

a) il est prévu une entrée du fluide sous pression (29) reliée à un appareil de production d'air comprimé et une sortie du fluide sous pression (12) reliée à au moins un récepteur, étant précisé que la sortie du fluide sous pression (12) présente un clapet antiretour (10, 11) qui peut venir en position d'ouverture en direction du récepteur;

b) il est prévu un piston de régulation (36) que la pression de sortie peut faire coulisser en agissant contre la force d'un élément de régulation;

c) le piston de régulation (36) est en liaison active avec un dispositif de robinet à soupape (13, 14) qui est disposé dans une chambre (31, 76) reliant l'entrée (29) du fluide sous pression à la sortie (12) du fluide sous pression et par lequel la chambre (31, 76) peut être reliée à une sortie (22) du fluide sous pression conduisant à l'atmosphère;

d) dans la sortie (22) du fluide sous pression est disposé au moins un élément amortisseur (19, 65) comportant au moins un passage;

e) il est prévu un écran (26, 69) qui peut coulisser par rapport à l'élément amortisseur (19, 65) au sens d'une diminution ou d'une augmentation de la section de passage du premier élément amortisseur (19, 65);

f) l'écran (26, 69) peut coulisser, en agissant contre une force de rappel, au sens d'une diminution de la section du passage de l'élément amortisseur (19, 65).

caractérisé en ce qu'entre la chambre (31, 76) et le côté de l'écran (26, 69) opposé au passage de l'élément amortisseur (19, 65) est prévue une liaison pour le fluide sous pression (30, 39, 61).

3. Dispositif selon la revendication 2, caractérisé par les attributs suivants:

a) l'élément amortisseur (19) a la forme d'un disque et présente au moins deux passages (20, 24) courant en direction axiale, étant précisé que les passages (20, 24) présentent des sections différentes.

b) l'écran (26) est disposé coaxialement à l'élément amortisseur (19) et présente au moins un passage (18) qui court en direction axiale et qui est disposé coaxialement au passage (20) de l'élément amortisseur (19) qui présente la section plus petite.

c) entre l'élément amortisseur (19) et l'écran (26) est disposé un ressort de compression (25).

d) l'écran (26) présente, sur sa face opposée à l'élément amortisseur (19), un prolongement qui est conçu sous forme d'un piston de manœuvre (26a) et qui est guidé, avec étanchéité, dans la chambre de manœuvre (30a) du dispositif de robinet à soupape (28) du robinet à soupape de régulation de pression.

e) la chambre de manœuvre (30a) du dispositif de robinet à soupape (26) est en liaison permanente, par l'intermédiaire d'un canal (39), avec la chambre (31) qui relie l'entrée du fluide sous pression (29) à la sortie du fluide sous pression (12).

f) l'écran (26) relié au piston de manœuvre (26a) est amené, sous l'action de la pression d'entrée sur le piston de manœuvre (26a), en agissant contre la force du ressort de compression (25), en butée contre l'élément amortisseur (19) et, lorsque la pression d'entrée descend en-dessous d'une valeur de pression déterminée par le ressort de compression (25), l'écran décolle de l'élément amortisseur (19) sous l'action de la force du ressort de compression (25).

4. Dispositif selon la revendication 2, caractérisé par les attributs suivants:

a) l'élément amortisseur (65) présente au moins un passage (67) qui court en direction de son axe longitudinal.

b) l'écran est constitué d'un élément d'étanchéité (69) qui peut coulisser, en agissant contre une force de rappel, en direction de l'axe transversal de l'élément amortisseur (65), au sens d'une diminution de section du passage (67) et/ou d'un autre passage (70) limité par l'écran.

c) il est prévu une liaison entre la chambre (76) qui relie l'entrée du fluide sous pression à la sortie du fluide sous pression et la face de l'élément d'étanchéité (69) opposée à l'autre passage (70).

5. Dispositif selon la revendication 4, caractérisé en ce que l'élément d'étanchéité (69) a, sur son côté opposé à l'autre passage (70), la forme d'une queue d'aronde, étant précisé que les saillies en forme de queue d'aronde de l'élément d'étanchéité (69) viennent en butée contre les surfaces du robinet à soupape de régulation de pression qui guident l'élément d'étanchéité (69).

6. Dispositif selon la revendication 2, caractérisé en ce que l'élément amortisseur et l'écran sont disposés dans le piston formant soupape.

Fig. 1

Fig. 2

Fig. 3

11